# EUROPÄISCHE PATENTSCHRIFT

(11) **EP 0 562 344 B1**
(45) Veröffentlichungstag und Bekanntmachung des Hinweises auf die Patenterteilung: **23.10.1996**
(21) Anmeldenummer: 93103716.2
(22) Anmeldetag: 09.03.1993
(51) Int. Cl.: C08F 220/58, C07C 51/00, C07C 59/08

(54) **Sulfogruppenhaltige Polymere**
Polymers containing sulphonic groups
Polymères contenant des groupes sulfoniques

(30) Priorität: 25.03.1992 DE 4209632
(43) Veröffentlichungstag der Anmeldung: 29.09.1993
(73) Patentinhaber: BASF Aktiengesellschaft, 67063 Ludwigshafen (DE)
(72) Erfinder: Schuler, Bernhard, Dr., W-6800 Mannheim 24 (DE); Dyllick-Brenzinger, Rainer, Dr., W-6940 Weinheim (DE); Biastoch, Ralf, Dr., W-6720 Speyer (DE)

(56) Entgegenhaltungen:
- EP-A- 0 026 914
- FR-A- 1 083 609

## Beschreibung

Die Erfindung betrifft Copolymere, die a) 20 bis 90 % 2-Acrylamido-2-methylpropansulfonsäure, Sulfoethyl- oder Sulfopropyl(meth)acrylat oder Vinylsulfonsäure, b) 0 bis 50 % einer vinylisch ungesättigten Säure, c) 0 bis 70 % Methyl- oder Ethyl-acrylat oder -methacrylat, C₂- bis C₄-Hydroxyalkylacrylat oder N-Vinylpyrrolidon und d) 0,1 bis 10 % Styrol, C₄- bis C₁₈-Alkylacrylat oder C₄- bis C₁₈-Alkylmethacrylat enthalten.

Vorteilhaft sind vor allem Copolymere, die 40 bis 75 % der Komponente a), 10 bis 40 %, bevorzugt 10 bis 30 % Acryl- oder Methacrylsäure als Komponente b), 10 bis 50 % der Komponente c) und 0,5 bis 5 % Styrol oder, eines C₄- bis C₁₈-Alkylacrylates oder -methacrylates enthalten.

Die Verbindungen a) werden in der Regel als Salze, z.B. als Alkali- oder Ammoniumsalze verwendet. Insbesondere sind die Natrium, Kalium- und Ammoniumsalze geeignet. Bevorzugt sind die Salze der 2-Acrylamido-2-methylpropansulfonsäure.

Verbindungen b) sind z.B. Maleinsäure, Itaconsäure, Acrylsäure oder Methacrylsäure. Insbesondere sind die ungesättigten einbasigen Säuren Acrylsäure und Methacrylsäure geeignet.

Als C₂-C₄-Hydroxyalkylacrylate c) können z.B. die Ethyl-, n-Propyl-, i-Propyl oder n-Butyl-Verbindungen verwendet werden.

Bevorzugte Verbindungen c) sind Methyl- oder Ethylacrylat oder -methacrylat.

Als C₄-C₁₈-Alkylacrylate bzw. -Methacrylate d) sind beispielsweise die n-Butyl-, sec.-Butyl-, tert.-Butyl-, Pentyl-, Hexyl-, Ethylhexyl-, Octyl-, Decyl-, Dodecyl- oder Stearyl-Verbindungen zu nennen. Insbesondere geeignet sind die n-Butyl- und Ethylhexylverbindungen.

Zur Herstellung der erfindungsgemäßen Copolymeren legt man zweckmäßigerweise Wasser vor, das auf Temperaturen von 30 bis 100°C, vorzugsweise 75 bis 90°C, erhitzt wird. Sobald diese Temperatur erreicht ist kann ein Teil oder die Gesamtmenge eines Polymerisationsstarters zugesetzt werden. Erfindungsgemäß werden dann das Monomerengemisch in einem oder mehreren getrennten Zuläufen sowie der Rest des Starters zugegeben. Der Zulauf benötigt in der Regel 1 bis 4 Stunden, häufig nur 1 bis 2 Stunden. Danach wird noch ungefähr 1 bis 3 Stunden nachgerührt. Je nach dem Verhältnis der hydrophilen Monomeren a) bis c) und der hydrophoben Monomeren d) erhält man eine klare Lösung oder eine milchige Dispersion.

Einzelheiten der Herstellung können den Beispielen entnommen werden, in denen sich die Angaben über Teile und Prozente, sofern nicht anders angegeben, auf das Gewicht beziehen.

Als Polymerisationsstarter eignen sich insbesondere wasserlösliche Verbindungen wie Natrium-, Kalium- oder Ammoniumperoxodisulfat, die Radikale durch thermischen Zerfall bilden. Es können aber erfindungsgemäß auch Polymerisationsstarter eingesetzt werden, die Radikale durch Redoxprozesse erzeugen. Hier ist beispielsweise das System H₂O₂/Ascorbinsäure/Fe-sulfat zu nennen. Erfindungsgemäß wird in solchen Fällen der eine Teil des Redoxinitiators in der Wasserphase vorgelegt und der andere zulaufen gelassen.

Die erfindungsgemäßen Copolymeren eignen sich vorzugsweise als Schutzkolloide bei der Herstellung von Mikrokapseldispersionen aus Melamin-Formaldehyd-Vorkondensaten, beispielsweise gemäß dem im Schutzrecht EP 026 914 beschriebenen Verfahren.

Gegenüber vergleichbaren, beispielsweise den im Schutzrecht EP 026 914 beschriebenen Schutzkolloiden, zeichnen sich die erfindungsgemäßen Copolymeren durch eine hervorragende dispersionsstabilisierende Wirkung aus. Dieser Effekt wird wahrscheinlich durch das Einpolymerisieren einer geringen Menge eines hydrophoben Monomeren d) erreicht und ist schon bei sehr niedrigen Anteilen an d) bei den erfindungsgemäßen Copolymeren zu beobachten. Dadurch kann im Gegensatz zu dem im EP 026 914 beschriebenen Verfahren auf den Zulauf des Melamin-Formaldehyd-Vorkondensates verzichtet und bereits von Anfang an die gesamte Menge des Melamin-Formaldehyd-Vorkondensats vorgelegt werden. Die Dispersion aus dem Kernmaterial und der wäßrigen Phase wird bereits von Anfang an stabilisiert.

Die FR-A 1 083 609 betrifft Polymere von Acrylamid oder dessen α-C₁-C₄-Alkylhomologen sowie Copolymere dieser Monomeren mit hydrophoben Monomeren wie Styrol, deren Amidgruppe durch polymeranaloge Umsetzung in die (-NH-CH₂-SO₃)-Gruppe überführt wurden. Die Polymere eignen sich u.a. als Schutzkolloide und Tenside.

In einer bevorzugten Ausführungsform wird eine Emulsion aus einem Kernmaterial, das aus flüssigen, festen oder gasförmigen Stoffen bestehen kann, die in Wasser unlöslich oder im wesentlichen unlöslich sind, und vorzugsweise destilliertem Wasser, in dem ein Melamin-Formaldehyd-Vorkondensat und ein erfindungsgemäßes Copolymer gelöst sind, mit Hilfe einer sauer wirkenden Verbindung auf einen pH von 3 bis 6,5 eingestellt. Die sauer wirkende Verbindung kann eine organische oder mineralische Säure sein. Beispielsweise sind Ameisensäure, Essigsäure oder Phosphorsäure geeignet. Mit Hilfe eines Hochleistungsdispergieraggregats wird bei Temperaturen von 0 bis 60°C, insbesondere von 25 bis 35°C die Teilchengröße der Emulsion eingestellt. Die Emulsion selbst ist zu jedem Zeitpunkt der Dispergierung stabil. Nach 10 bis 30 Minuten, insbesondere nach 10 bis 20 Minuten, ist die von der Drehzahl des Hochleistungsdispergieraggregats abhängige minimal herstellbare mittlere Teilchengröße praktisch erreicht. Der genaue Zeitbedarf hängt von der gewünschten mittleren Teilchengröße ab und nimmt in der Regel mit abnehmender mittlerer Teilchengröße bzw. zunehmender Drehzahl zu. Die stabile Emulsion, in der sich die Kapseln bilden, kann dann vorzugsweise unter Rühren bei niedriger Scherung, beispielsweise mit einem mit Anker- oder Propellerrührer, bei 50 bis 100°C zu einer Mikrokapseldispersion ausgehärtet werden. Typische Beispiele für Kernmaterialien und Melamin-Formaldehyd-Vorkondensate sind beispielsweise in dem Schutzrecht EP 026 914 beschrieben.

### Beispiel 1

In einem zylindrisch geformten 4-l-Rührgefäß mit einem eingebauten Ankerrührer werden 1050 g Wasser vorgelegt und auf 75°C erhitzt. Bei dieser Temperatur werden 0,15 g Kaliumpersulfat zugegeben. Innerhalb einer Stunde läßt man dann gleichzeitig eine Mischung aus 80 g Acrylsäure, 80 g Methylacrylat und 4 g Styrol, eine Lösung von 236 g 2-Acrylamido-2-methylpropansulfonsäure in 400 g Wasser, die mit 305 g 20 %iger NaOH neutralisiert wurde, und eine Lösung von 1,35 g Kaliumpersulfat in Wasser zulaufen. Es wird drei Stunden bei 75°C nachpolymerisiert. Man erhält eine farblose, leicht trübe viskose Lösung.

### Beispiele 2 bis 8

Sieben weitere sulfogruppenhaltige Copolymere wurden entsprechend der obigen Vorschrift synthetisiert. Die Einsatzstoffmengen sind in der Tabelle 1 aufgeführt.

**Tabelle 1**

| | | | | | | | | |
|---|---|---|---|---|---|---|---|---|
| AMPS : 2-Acrylamido-2-methylpropansulfonsäure | | | | | | | | |
| AS : Acrylsäure | | | | | | | | |
| MAS : Methacrylsäure | | | | | | | | |
| MA : Methylacrylat | | | | | | | | |
| VP : N-Vinylpyrrolidon | | | | | | | | |
| S : Styrol | | | | | | | | |
| EHA : Ethylhexylacrylat | | | | | | | | |
| BA : n-Butylacrylat | | | | | | | | |

| Bsp. Nr. | AMPS | AS | MAS | MA | VP | S | EHA | BA |
|---|---|---|---|---|---|---|---|---|
| 1 | 59 | 20 | | 20 | | 1 | | |
| 2 | 59,5 | 20 | | 20 | | 0,5 | | |
| 3 | 45 | 40 | | 10 | | 5 | | |
| 4 | 58 | 20 | | 20 | | | 2 | |
| 5 | 49 | | | 20 | 30 | 1 | | |
| 6 | 69 | | | 30 | | 1 | | |
| 7 | 74 | | 25 | | | 1 | | |
| 8 | 59 | 20 | | 20 | | | | 1 |

### Beispiel 9

In einem zylindrisch geformten geformten 4-l-Rührgefäß mit einem eingebauten Ankerrührer werden 1050 g Wasser vorgelegt und auf 80°C erhitzt. Bei dieser Temperatur werden 1,5 g Kaliumpersulfat zugegeben. Innerhalb einer Stunde läßt man dann gleichzeitig eine Mischung aus 80 g Acrylsäure, 80 g Methylacrylat und 4 g Styrol und eine Lösung von 236 g 2-Acrylamido-2-methylpropan-sulfonsäure in 400 g Wasser, die mit 305 g 20 %iger NaOH neutralisiert wurde, zulaufen. Es wird eine Stunde bei 80°C nachpolymerisiert. Man erhält eine farblose, leicht trübe viskose Lösung.

### Vergleichsbeispiele 1 bis 6 ohne hydrophobes Monomer d)

Nach der Vorschrift des Beispiels 1 wurden sulfogruppenhaltige Copolymere mit den in der Tabelle 2 aufgeführten Zusammensetzungen hergestellt.

**Tabelle 2**

| Vgl. Bsp. Nr. | AMPS | AS | MAS | MA | VP |
|---|---|---|---|---|---|
| 1 | 60 | 20 | | 20 | |
| 2 | 50 | 40 | | 10 | |
| 3 | 50 | | | 20 | 30 |
| 4 | 70 | | | 30 | |
| 5 | 75 | | 25 | | |
| 6 | 100 | | | | |

### Herstellung der Mikrokapseldispersion

### Beispiel 10

In einem zylindrisch geformten 4-l-Rührgefäß mit einem eingebauten Hochleistungsdispergieraggregat werden 1259 g Wasser, 1040 g einer Lösung eines Farbbildners (z.B. 50 g Kristallviolettlakton in einem organischen Lösungsmittel wie Di-isopropylnaphthalin), 200 g eines sulfogruppenhaltigen Copolymers gemäß den Beispielen 1 bis 9 und 229 g eines teilveretherten, methylolierten Melamin-Formaldehydharzes (s. Beispiel 1, Zeilen 23/24, EP-B-26 914) vorgelegt. Nach der mit Ameisensäure erfolgten Einstellung des pH-Wertes auf 3,5 bis 4,5 wird mit einem Hochleistungsdispergieraggregat bei 30°C 10 bis 20 Minuten dispergiert. Man erhält eine Dispersion mit einer sehr engen Teilchengrößenverteilung. Die mittlere Teilchengröße kann durch die Drehzahl des Dispergieraggregats eingestellt werden. Dann wird die Dispersion in ein zylindrisch geformtes 4-1-Rührgefäß überführt, das mit einem Anker- oder Propellerrührer versehen ist, und unter geringer Scherung bei 80°C ausgehärtet. Man erhält Mikrokapseln mit ausgezeichneter Dichtigkeit, sehr geringer Reibempfindlichkeit und hoher Durchschriftintensität.

### Beispiel 11

In drei Vorratsgefäßen werden folgende Zuläufe vorgerichtet:
1. 4190 g Wasser, 1130 g des sulfogruppenhaltigen Copolymers aus Beispiel 1 und 700 g Ameisensäure (10%ig);
2. 5410 g einer Farbbildnerlösung (z.B. Kristallviolettlakton in einem organischen Lösungsmittel wie Diisopropylnaphthalin);
3. 2380 g Wasser und 1190 g eines 70%igen teilveretherten, methylolierten Melamin-Formaldehyd-Harzes.

Die Zuläufe 1 bis 3 werden mit Hilfe von Kolbenpumpen über Rohrleitungen einem Dispergiergerät in einem Verhältnis von 95:165:165 zugeführt und dort unmittelbar vor dem Eintritt in das Dispergiergerät vermischt. Die das Dispergiergerät verlassende Dispersion ist stabil. 2 kg dieser Dispersion werden in einem zylindrisch geformten 4-l-Rührgefäß aufgefangen und bei 80°C unter geringer Scherung mit einem Anker- oder Propellerrühre ausgehärtet. Man erhält Mikrokapseln mit ausgezeichneter Dichtigkeit, sehr geringer Reibempfindlichkeit und hoher Durchschriftintensität.

Diese Arbeitsweise eignet sich insbesondere zur kontinuierlichen Dispergierung.

### Vergleichsbeispiel

Es wird nach der Vorschrift des Beispiels 10 verfahren. Anstelle eines sulfogruppenhaltigen Copolymeren gemäß den Beispielen 1 bis 9 wird jedoch ein sulfogruppenhaltiges Copolymer entsprechend den Vergleichsbeispielen 1 bis 6 verwendet. Nach einer 10 bis 20 Minuten dauernden Dispergierung mit einem Hochleistungsdispergieraggregat erhält man eine weitgehend instabile Dispersion mit einer sehr breiten Teilchengrößenverteilung. Nach der Überführung in das zylindrisch geformte, mit einem Anker- oder Propellerrührer versehene 4-1-Rührgefäß laufen die dispergierten Tröpfchen zusammen. Eine Aushärtung zu einer Mikrokapseldispersion ist in der Regel nicht möglich.

## Patentansprüche

1. Copolymer, enthaltend
a) 20 bis 90 % 2-Acrylamido-2-methylpropansulfonsäure, Sulfoethyl- oder Sulfopropyl(meth)acrylat oder Vinylsulfonsäure,
b) 0 bis 50 % einer vinylisch ungesättigten Säure,
c) 0 bis 70 % Methyl- oder Ethyl-acrylat oder -methacrylat, C₂- bis C₄-Hydroxyalkylacrylat oder N-Vinylpyrrolidon und
d) 0,1 bis 10 % Styrol oder C₄- bis C₁₈-Alkylacrylat oder C₄- bis C₁₈-Alkylmethacrylat.

2. Copolymer nach Anspruch 1, dadurch gekennzeichnet, daß es
a) 40 bis 75 % 2-Acrylamido-2-methylpropansulfonsäure, Sulfoethyl- oder Sulfopropyl(meth)acrylat oder Vinylsulfonsäure,
b) 10 bis 40 % Acrylsäure oder Methacrylsäure,
c) 10 bis 50 % Methyl- oder Ethyl-acrylat oder -methacrylat, C₂- bis C₄-Hydroxyalkylacrylat oder N-Vinylpyrrolidon und
d) 0,5 bis 5 % Styrol oder C₄- bis C₁₈-Alkyl-acrylat oder -methacrylat
enthält.

3. Copolymer nach Anspruch 1, dadurch gekennzeichnet, daß es
a) 40 bis 75 % 2-Acrylamido-2-methylpropansulfonsäure, Sulfoethyl- oder Sulfopropyl(meth)acrylat oder Vinylsulfonsäure,
b) 10 bis 30 % Acrylsäure oder Methacrylsäure,
c) 10 bis 50 % Methyl- oder Ethyl-acrylat oder -methacrylat oder N-Vinylpyrrolidon und
d) 0,5 bis 5 % Styrol oder C₄- bis C₁₈-Alkyl-acrylat oder -methacrylat
enthält.

4. Verfahren zur Herstellung der Copolymeren nach Anspruch 1, dadurch gekennzeichnet, daß die Polymerisation in wäßriger Phase durchgeführt wird.

5. Verfahren zur Herstellung der Copolymeren nach Anspruch 1, dadurch gekennzeichnet, daß die Copolymeren durch radikalische Polymerisation hergestellt werden.

6. Verwendung der Copolymeren gemäß Anspruch 1 als Schutzkolloide bei der Mikroverkapselung.

## Claims

1. A copolymer containing
a) 20 - 90 % of 2-acrylamido-2-methylpropanesulfonic acid, sulfoethyl or sulfopropyl (meth)acrylate or vinylsulfonic acid,
b) 0 - 50 % of a vinylic acid,
c) 0 - 70 % of methyl or ethyl acrylate or methacrylate, C₂-C₄-hydroxyalkyl acrylate or N-vinylpyrrolidone and
d) 0.1 - 10 % of styrene or C₄-C₁₈-alkyl acrylate or C₄-C₁₈-alkyl methacrylate.

2. A copolymer as claimed in claim 1, which contains
a) 40 - 75 % of 2-acrylamido-2-methylpropanesulfonic acid, sulfoethyl or sulfopropyl (meth)acrylate or vinylsulfonic acid,
b) 10 - 40 % of acrylic acid or methacrylic acid,
c) 10 - 50 % of methyl or ethyl acrylate or methacrylate, C₂-C₄-hydroxyalkyl acrylate or N-vinylpyrrolidone and
d) 0.5 - 5 % of styrene or C₄-C₁₈-alkyl acrylate or methacrylate.

3. A copolymer as claimed in claim 1, which contains
a) 40 - 75 % of 2-acrylamido-2-methylpropanesulfonic acid, sulfoethyl or sulfopropyl (meth)acrylate or vinylsulfonic acid,
b) 10 - 30 % of acrylic acid or methacrylic acid,
c) 10 - 50 % of methyl or ethyl acrylate or methacrylate or N-vinylpyrrolidone and
d) 0.5 - 5 % of styrene or C₄-C₁₈-alkyl acrylate or methacrylate.

4. A process for preparing a copolymer as claimed in claim 1, which comprises carrying out the polymerization in aqueous phase.

5. A process for preparing a copolymer as claimed in claim 1, which comprises preparing the copolymer by free-radical polymerization.

6. The use of a copolymer as claimed in claim 1 as protective colloid in microencapsulation.

## Revendications

1. Copolymère, qui contient
a) 20 à 90% d'acide 2-acrylamido-2-méthylpropanesulfonique, de (méth)acrylate de sulfoéthyle ou de sulfopropyle, ou d'acide vinylsulfonique,
b) 0 à 50% d'un acide à insaturation vinylique,
c) 0 à 70% d'acrylate ou de méthacrylate de méthyle ou d'éthyle, d'acrylate d'hydroxyalkyle en C₂ à C₄, ou de N-vinylpyrrolidone, et
d) 0,1 à 10% de styrène ou d'acrylate d'alkyle en C₄ à C₁₈, ou de méthacrylate d'alkyle en C₄ à C₁₈.

2. Copolymère suivant la revendication 1, caractérisé en ce qu'il contient
a) 40 à 75% d'acide 2-acrylamino-2-méthylpropanesulfonique, de (méth)acrylate de sulfoéthyle ou de sulfopropyle, ou d'acide vinylsulfonique,
b) 10 à 40% d'acide acrylique ou d'acide méthacrylique,
c) 10 à 50% d'acrylate ou de méthacrylate de méthyle ou d'éthyle, d'acrylate d'hydroxyalkyle en C₂ à C₄, ou de N-vinylpyrrolidone, et
d) 0,5 à 5% de styrène ou d'acrylate ou de méthacrylate d'alkyle en C₄ à C₁₈.

3. Copolymère suivant la revendication 1, caractérisé en ce qu'il contient
a) 40 à 75% d'acide 2-acrylamido-2-méthylpropanesulfonique, de (méth)acrylate de sulfoéthyle ou de sulfopropyle, ou d'acide vinylsulfonique,
b) 10 à 30% d'acide acrylique ou d'acide méthacrylique,
c) 10 à 50% d'acrylate ou de méthacrylate de méthyle ou d'éthyle, ou de N-vinylpyrrolidone, et
d) 0,5 à 5% de styrène ou d'acrylate ou de méthacrylate d'alkyle en C₄ à C₁₈.

4. Procédé de préparation de copolymères suivant la revendication 1, caractérisé en ce que l'on entreprend la polymérisation en phase aqueuse.

5. Procédé de préparation de copolymères suivant la revendication 1, caractérisé en ce que l'on prépare les copolymères par polymérisation radicalaire.

6. Utilisation des copolymères suivant la revendication 1, à titre de colloïdes protecteurs pour la microencapsulation.
